# EUROPÄISCHE PATENTSCHRIFT

(11) **EP 0 992 547 B1**
(45) Veröffentlichungstag und Bekanntmachung des Hinweises auf die Patenterteilung: **30.11.2005**
(21) Anmeldenummer: 99117456.6
(22) Anmeldetag: 09.09.1999
(51) Int. Cl.: C09B 67/24, C09B 67/54, D06L 3/12, C09B 69/04

(54) **Verfahren zur Herstellung von Farbstoffen und/oder Aufhellerzubereitungen**
Method for producing preparations of dyestuffs and/or brighteners
Procédé de production de préparations de colorants et/ou d'éclaircissants

(30) Priorität: 22.09.1998 DE 19843381; 16.06.1999 DE 19927398
(43) Veröffentlichungstag der Anmeldung: 12.04.2000
(73) Patentinhaber: LANXESS Deutschland GmbH, 51369 Leverkusen (DE)
(72) Erfinder: Zarges, Wolfgang, Dr., 51065 Köln (DE); Brockmann, Rolf, Dr., 51469 Bergisch Gladbach (DE); Bacher, Erwin, Dr., 51467 Bergisch Gladbach (DE); Szeymies, Detlef, Dr., 51515 Kürten (DE)

(56) Entgegenhaltungen:
- EP-A- 0 197 006
- EP-A- 0 263 791
- EP-A- 0 278 320
- EP-A- 0 287 515
- EP-A- 0 288 434
- EP-A- 0 302 015
- EP-A- 0 602 562
- EP-A- 0 652 044
- EP-A- 0 802 240
- DE-A- 4 401 471
- DE-C- 19 500 791
- GB-A- 2 290 803

## Beschreibung

Die Erfindung betrifft Verfahren zur Herstellung von Farbstoffen und/oder Aufhellerzubereitungen.

Gemäß EP-A-835 906 werden Dispersionen optischer Aufheller mit SO₃H-Gruppen zum Aufhellen von Papier beschrieben. Da die Synthesesalze, die bei der Herstellung des Aufhellers anfallen, das nachträgliche Lösen mit Natronlauge hinsichtlich der maximal möglichen Aufhellerkonzentration stark beeinträchtigen, ist auch in wäßrigen Dispersionen optischer Aufheller mit SO₃H-Gruppen der Salzgehalt möglichst klein zu halten.

In EP-A-835 906 erfolgt das Entsalzen dabei beispielsweise so, daß der Aufhellerpreßkuchen mit entmineralisiertem Wasser gewaschen wird. Nachteilig bei dieser Verfahrensweise ist es, einerseits einen hohen Produktverlust beim Handhaben von Preßkuchen zu erleiden und andererseits nur mäßige und nicht reproduzierbare Entsalzungsbedingungen aufgrund von Kanalbildungen im Preßkuchen zu haben, wodurch eine gute Entsalzung nur lokal begrenzt gewährleistet ist.

Gemäß EP-A-802 240 werden sulfongruppenhaltige Farbstoffe mittels Ultrafiltrationsmembranen entsalzt. Aus EP-A-302 015 ist eine mehrstufige Membrananlage zur kontinuierlichen Aufarbeitung von Rohfarbstoffsuspensionen bekannt. In EP-A-652 044 wird die membrantechnische Aufarbeitung von sauren Syntheseprodukten mit speziellen Polyhamstoffmembranen beschrieben. EP-A-14407 offenbart Kupferphthalocyanin als wässrige Lösungen. In DE-A-1 950 0791, GB-A-2 290 803 und DE-A-4 401 471 werden optische Aufheller für verschiedene Anwendungen offenbart.

Aufgabe der vorliegenden Erfindung ist es, die bestehenden Trennverfahren zu verbessern. Angestrebt wird vor allem eine hohe Durchflußrate, bei niedrigen Arbeitsdrücken verbesserte Entsalzungsleistung und generell eine hohe Betriebssicherheit.

Die Erfindung betrifft daher weiterhin ein Verfahren zur Herstellung von Zubereitungen anionischer Farbstoffe und/oder Aufheller, die wenigstens eine SO₃M-und/oder COOM-Gruppe besitzen, worin M = Alkali oder Ammonium bedeutet, dadurch gekennzeichnet, daß
i) man eine wäßrige Suspension enthaltend
   a) Farbstoffe und/oder Aufheller, die wenigstens eine freie SO₃H-und/oder COOH-Gruppe besitzen und
   b) anorganische Synthesesalze
   mit einer Mikrofiltrationsmembran mit Porendurchmessern von 0,05 bis 40 µm entsalzt und
ii) nach der Entsalzung den suspendierten Farbstoff und/oder Aufheller durch Zugabe von Alkali- oder Ammonium-Hydroxid, -Carbonat und/oder - Hydrogencarbonat, und/oder Aminen löst und
iii) die nach ii) erhaltene Farbstoff- und/oder Aufhellerlösung gegebenenfalls nach Zugabe weiterer Zusätze, insbesondere Lösungsmittel, mit einer Mikrofiltrationsmembran mit Porendurchmessern von 0,05 bis 40 µm von kolloidalen und/oder unlöslichen Bestandteilen befreit.

Für den Teilschritt i) dieses Verfahrens gelten die nachfolgenden Vorzugsbereiche.

Die Farbstoffe und/oder Aufheller mit wenigstens einer freien SO₃H- und/oder COOH-Gruppe können selbstverständlich auch zusammen mit ihren Salzformen (beispielsweise Alkali, Erdalkali oder Ammoniumsalzen) vorliegen. Bevorzugt ist es jedoch, daß wenigstens ein Farbstoff und/oder Aufheller zu wenigstens 90 Mol-% in Form seiner freien Säure vorliegt.

Die eingesetzte Mikrofiltrationsmembran kann beispielsweise in der Querstrom (cross-flow) Fahrweise betrieben werden.

Für die cross-flow-Membranfiltration werden vorzugsweise mikroporöse Membranen als Kapillaren, Röhren und in Spiralwickelmodulbauform eingesetzt. Die Membranen werden beispielsweise aus anorganischen (z.B. TiO₂, ZrO₂, Al₂O₃) oder organischen Werkstoffen (z.B. Polypropylen oder teil- oder vollfluorierte Polymere, Polysulfon, Polyethersulfon) hergestellt, wobei die Porendurchmesser vorzugsweise bei 0,05 bis 3,0 µm liegen. Die cross-flow-Verfahrensweise zeichnet sich dadurch aus, daß die Membranen von der Produktlösung/Suspension tangential überströmt werden. Bevorzugt werden dabei transmembrane Drücke von 1 bis 10 bar angelegt. Ebenfalls bevorzugt ist es, eine periodische Rückspülung von der Permeatseite zur Aufrechterhaltung hoher Permeatleistungen durchzuführen.

Das erfindungsgemäße Verfahren arbeitet im Teilschritt i) besonders vorteilhaft, wenn der pH-Wert der zu entsalzenden Suspension 1 bis 6, insbesondere 2 bis 5 beträgt.

Ebenfalls vorteilhaft ist es, wenn die Säureform (SO₃H und/oder COOH) des Farbstoffs bzw. Aufhellers eine Wasserlöslichkeit von weniger als 5 g/l, vorzugsweise weniger als 1 g/l unter den jeweiligen Verfahrensbedingungen besitzt.

Bevorzugt wird das erfindungsgemäße Verfahren zur Entsalzung von SO₃H-grup-penhaltigen Farbstoffen und/oder Aufhellern, insbesondere Aufhellern verwendet.

Die bevorzugte Farbstoff- und/oder Aufhellermenge in der zu entsalzenden wäßrigen Suspension beträgt 100 bis 500 g/l, insbesondere 150 bis 400 g/l zu entsalzender wäßriger Suspension. Dabei beträgt der anorganische Salzgehalt in der Suspension vor der Entsalzung im allgemeinen 1 bis 25, vorzugsweise 2 bis 8 Gew.-%, bezogen auf die Suspension. Der mittels des erfindungsgemäßen Verfahrens bevorzugt einzustellende anorganische Salzgehalt ist < 1 Gew.-%, insbesondere weniger als 0,5 Gew.-%. Bei dem anorganischen Synthesesalz handelt es sich vorzugsweise um Alkali-Halogenide, -Sulfate oder -Hydrogensulfate.

Die erfindungsgemäße Entsalzung gemäß Teilschritt i) erfolgt vorzugsweise bei einer Temperatur von 25 bis 70°C, insbesondere bei 30 bis 50°C.

Die Entsalzung kann dabei unter Aufkonzentration oder als Diafiltration betrieben werden. Bei der Diafiltration wird das gebildete Permeat kontinuierlich durch vollentsalztes Wasser ersetzt.

Besonders bevorzugt werden bei dem erfindungsgemäßen Verfahren als optische Aufheller solche der Formeln (I), (II) und/oder (III) eingesetzt, 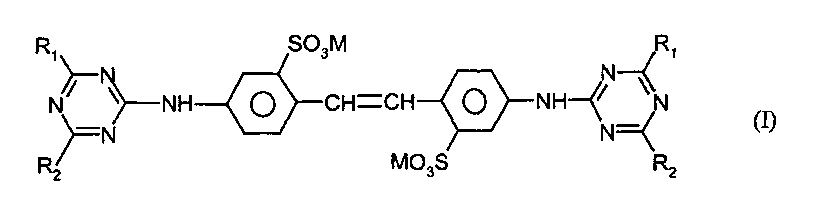 worin
- M: für H steht,
- R₁ und R₂: unabhängig voneinander -NH₂, -NHCH₃, -NHC₂H₅, -N(CH₃)₂, -N(C₂H₅)₂, -NHCH₂CH₂OH, -NHCH₂CH₂CH₂OH, -N(CH₂CH₂OH)₂, -N(CH₂CH₂CH₂OH)₂, -N(CH₃)(CH₂CH₂OH), -NHCH₂CH₂OCH₂CH₂OH, -NHCH₂CH₂CH₂SO₃M, -OH, -OCH₃, -OCH(CH₃)₂, -OCH₂CH₂OCH₃, 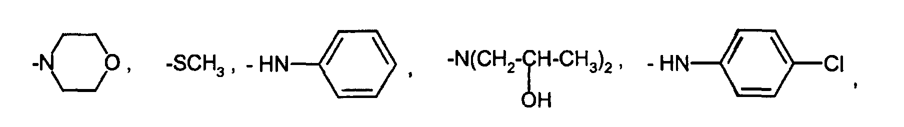 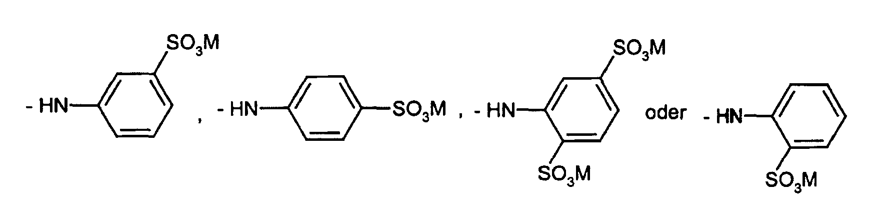
bedeuten, worin
- M: die angegebene Bedeutung hat;
oder der Formel 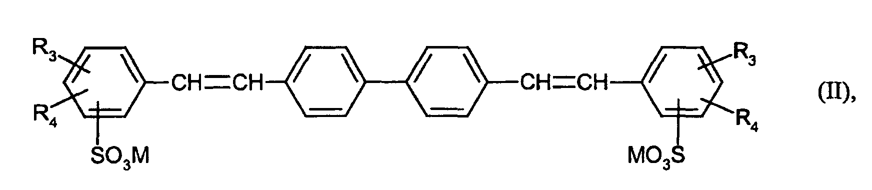 worin
- R₃: Wasserstoff, Alkyl mit 1 bis 4 Kohlenstoffatomen, Alkoxy mit 1 bis 4 Kohlenstoffatomen, Halogen oder SO₃M, und
- R₄: Wasserstoff oder Alkyl mit 1 bis 4 Kohlenstoffatomen ist und
- M: die angegebene Bedeutung hat;
ferner die Formel 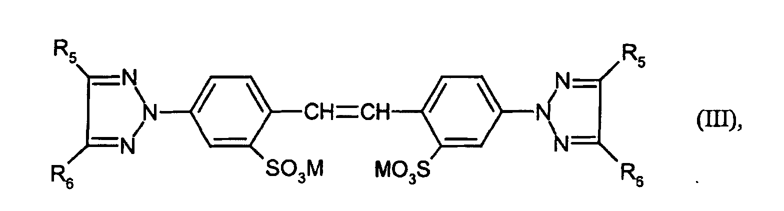 worin
- M: die angegebene Bedeutung hat und
- R₅ und R₆: unabhängig voneinander Wasserstoff, CH₃, 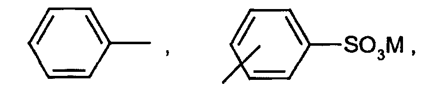
oder
- R₅ und R₆: zusammen die Ergänzung zu einem Benzolring bedeuten.

Ganz besonders bevorzugt sind solche Aufheller der Formel (I), insbesondere die der Formel (Ia)

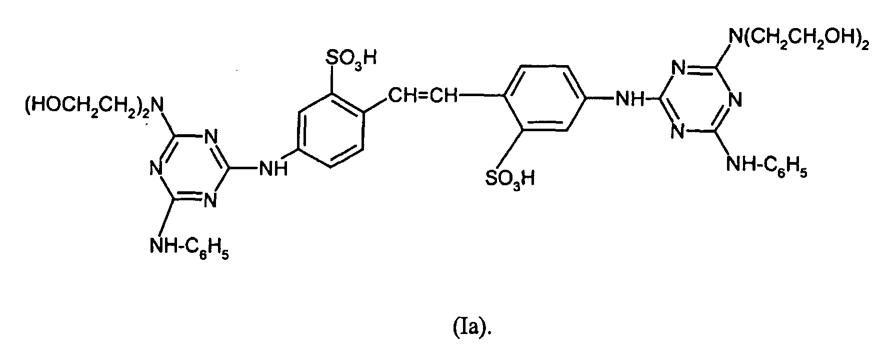

Für den Teilschritt ii) des erfindungsgemäßen Verfahrens werden vorzugsweise NaOH, LiOH, KOH, K₂CO₃, Na₂CO₃, NR₁R₂R₃R₄OH, NR₁R₂R₃, wobei R₁, R₂, R₃ und R₄ unabhängig voneinander H, Alkyl, Aryl (gegebenenfalls substituiert) bedeuten, zur Lösung des dispergierten Farbstoffes bzw. Aufhellers verwendet. Bevorzugt sind KOH, LiOH, N(CH₃)₄OH, H₂NCH₂CH₂OH, HN(CH₂CH₂OH)₂ und H₂NCH₂CH₂NHCH₂CH₂OH.

Gegebenenfalls kann bei dem Teilschritt ii) ein oder mehrere Lösungsvermittler wie beispielsweise ε-Caprolactam, Harnstoff, Triethylenglykol, Polyethylenglykol, Propandiol, 1-Ethoxy-2-propanol und/oder Diethylenglykol zugegeben werden. Durch die Wahl der eingesetzten Base(n) läßt sich das Gegenion für den anionischen Farbstoff bzw. Aufheller bestimmen.

Für den Teilschritt iii) des erfindungsgemäßen Verfahrens werden als Microfiltrationsmembranen vorzugsweise solche eingesetzt wie sie bereits oben beschrieben sind. Die in den Teilschritten i) und iii) verwendeten Membranen sind dabei unabhängig voneinander. Sie können, müssen aber nicht identisch sein. Es kann also durchaus ein anderes Membranmaterial und/oder eine andere Modulbauform als für den Teilschritt i) eingesetzt werden. Vorzugsweise besitzen die eingesetzten Membranen für den Teilschritt iii) jedoch Porengrößen, die über der Größe des anionischen optischen Aufhellers bzw. Farbstoffe bzw. ihrer Lösungsaggregate liegen. Der Teilschritt iii) wird vorzugsweise als dead-end-Filtration betrieben.

"dead-end" Modus bedeutet, daß die Membran bzw. der Membranfilter während der überwiegenden Permeationszeit nicht tangential überströmt wird. Zum Beispiel können Cross-flow Apparaturen in der angegebenen Weise benutzt werden, wenn die Retentatseite vollständig geschlossen und nur zum Austrag zurückgehaltener Partikel periodisch kurzzeitig geöffnet wird.

Die Abtrennung der kolloidalen und/oder unlöslichen Bestandteile erfolgt vorzugsweise bei einer Temperatur von 40 bis 100°C, vorzugsweise bei 50 bis 80°C.

Durch entsprechende Membranauswahl für den Teilschritt iii) vorzugweise mit Porendurchmesser < 0,2 µm, kann diese Filtration auch als Sterilfiltration durchgeführt werden.

Die nach dem Teilschritt iii) des erfindungsgemäßen Verfahrens erhaltene Farbstoff- bzw. Aufhellerlösung kann gegebenenfalls nach Zugabe von Formulierungshilfsmitteln, durch Entzug von Wasser zu einer festen (Pulver oder Granulat) Farbstoff- bzw. Aufhellerpräparation getrocknet oder gegebenenfalls nach Zugabe von Formulierungshilfsmitteln wie Lösungsvermittlern (Harnstoff, Harnstoffderivate, Glykole, Polyglykole, Alkanolamine, Lactame wie ε-Caprolactam etc.) als stabile Flüssigformulierung weiterverwendet werden.

Es ist ebenfalls vorteilhaft dem erfindungsgemäßen Verfahren eine Aufkonzentration beispielsweise durch membrantechnische Entwässerung anzuschließen.

Vor, während oder nach dem erfindungsgemäßen Verfahren kann gegebenenfalls die Teilchengröße der Farbstoff- oder Aufhellerdispersion durch ein Naßzerkleinerungsverfahren, wie z.B. Cavitronmahlung, Strahldispergatortechnik, Perlmahlung etc. eingestellt werden.

Die nach dem erfindungsgemäßen Verfahren erhaltenen Farbstoff- und/oder Aufhellerdispersionen können beispielsweise nach Zugabe weiterer Zusätze wie Polyvinylpyrrolidon, handelsübliche anionische Dispergiermittel beispielsweise Formaldehyd-Naphthalinsulfonsäurekondensate oder andere Kondensationsprodukte aus aromatischen Sulfonsäuren und Formaldehyd oder Stärkeabbauprodukte, wie beispielsweise anionische Polyhydroxyverbindungen, vorzugsweise Xanthan, vermischt bzw. homogenisiert werden und dann zum Färben bzw. Aufhellen von Papiermassen bei der Papierherstellung und zum Aufhellen bzw. Färben der in der Papierindustrie üblicherweise verwendeten Streichmassen eingesetzt werden, wobei letztere unpigmentiert oder vorzugsweise pigmentierte Papier- und Streichmassen sind.

Als weitere Zusätze sind aber auch Reduktionsmittel und Konservierungsmittel zu nennen.

Ebenfalls Gegenstand dieser Anmeldung sind

### Verbindungen der Formel

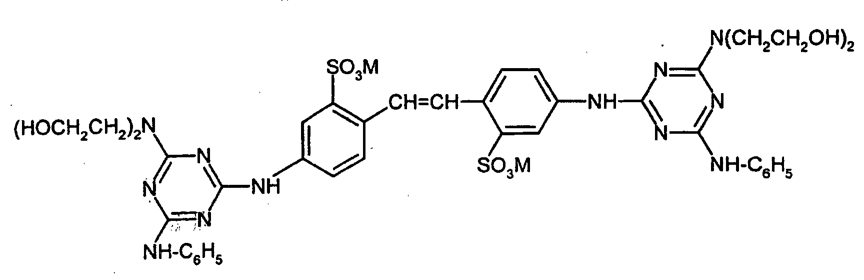

worin
- M: für ^{⊕}N(CH₃)₄ oder H₂^{⊕}N(CH₂CH₂OH)₂ steht,

Verwendung der sowie die Verbindungen sowie der Verbindung vorstehen den folgender Formel 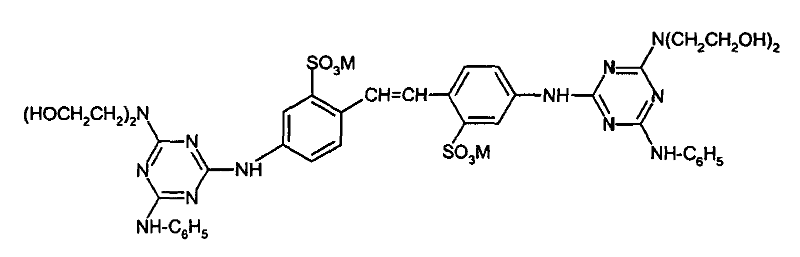 worin
- M: für H₃⊕NCH₂CH₂OH oder H₃^{⊕}NCH₂CH₂NHCH₂CH₂OH steht zum Aufhellen von cellulosehaltigen Materialien, insbesondere von Papier,
als auch eine
Streichmasse enthaltend

5 bis 70 Gew.-% eines Weißpigments und 0,005 bis 1 Gew.-% eines Aufhellers, bezogen auf Weißpigment, der Formel 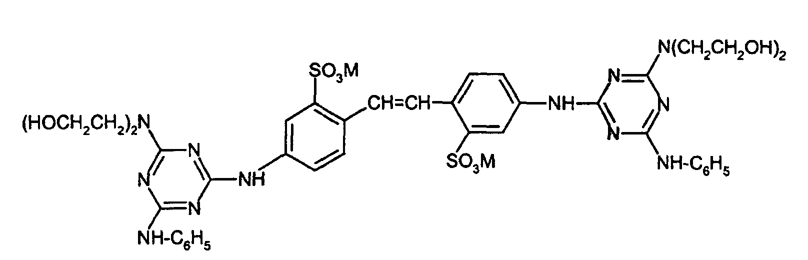 worin
- M: für ^{⊕}N(CH₃)₄, H₂^{⊕}N(CH₂CH₂OH)₂, H₃^{⊕}NCH₂CH₂OH oder H₃^{⊕}NCH₂CH₂NHCH₂CH₂OH steht.

Aufheller werden vorzugsweise auf drei Arten bei der Papierherstellung appliziert:
- Masse:: Dies ist die Zellstoffsuspension vor der Herstellung des Papiers. Hier werden vorzugsweise die Aufheller mit 2 Sulfogruppen eingesetzt.
- **Streichmasse, Strich**:: Hier wird ein Coating nach der Trockenpartie auf das fertige Papier aufgebracht. Neben opt. Aufheller, vorzugsweise solche mit 6 Sulfogruppen enthält die Streichmasse u.a. Pigmente (Kreide, Clay), Latexbinder, Cobinder und Dispergiermittel.
- **Leimpresse:**: Nach der Trockenpartie läuft fast fertiges Papier durch die Leimpresse, die z.B. aus gegenläufigen Walzen bestehen kann, die wiederum durch einen Sumpf, enthaltend Stärke und opt. Aufheller, laufen. Die Applikation kann aber auch via Foulard oder Spray erfolgen, wonach sich vorzugsweise eine Trockenpartie anschließt.

Bei der Applikation der nach dem erfindungsgemäßen Verfahren hergestellten Farbstoff- und/oder Aufhellerdispersionen ist ein alkalischer pH-Wert für die einwandfreie Lösung günstig. Dieser pH-Wert sollte bei Streichmassen vor allem im Bereich von 8 bis 11 und in der Masse vor allem bei 7,5 bis 9 liegen. Der gewünschte pH-Wert kann z.B. durch Zugabe von NaOH eingestellt werden, wobei man vorzugsweise diesen pH-Wert in der Faserstoffdispersion oder der Streichmasse bereits vor der Zugabe der Aufhellerdispersion einstellt. Bei Verwendung von alkalischen Füllmitteln, wie gefälltem oder natürlichem Calciumcarbonat, kann auf die Zugabe von Alkali verzichtet werden.

Nicht nur die Herstellung SO₃H- bzw. COOH-haltiger Farbstoffe bzw. Aufheller-Zubereitungen sondern auch die Herstellung ihrer Salze, insbesondere ihrer wäßrigen Lösungen lassen sich verbessern.

Wasserlösliche organische Farbstoffe bzw. Aufheller fallen am Ende der Synthese im allgemeinen in Form verdünnter wäßriger Lösungen an, die durch Nebenprodukte verunreinigt sind und zudem, in Abhängigkeit von der Synthese noch anorganische Salze, z.B. Alkalimetallchloride oder -sulfate enthalten. Um von derartigen Rohlösungen verkaufsfertige Präparate herzustellen, müssen diese aufkonzentriert und möglichst weitgehend von Salzen und Nebenprodukten befreit werden. Ein hoher Salzgehalt wirkt sich vor allem negativ auf die Haltbarkeit von Flüssigformulierungen aus, während Nebenprodukte die oftmals auch eine Eigenfarbe besitzen zu einer Verschiebung des Farbtons führen können. Es sind bereits membrantechnische Verfahren zur Reinigung entsprechender Farbstoff- bzw. Aufhellersalze bekannt. Man arbeitet im allgemeinen mit Lösungen, d.h. in vergleichsweise niedrigen Konzentrationen, wobei vorzugsweise Membranen mit ausreichendem Rückhalt für die gelösten Spezies einsetzt werden (UF, NF). Ultrafiltrations-(UF) bzw. Nanofiltrations(-NF)-membranen erfordern Betriebsdrücke größer 10 bar und ziehen so hohe Betriebskosten nach sich. In EP-A 197 006 sind bereits Verfahren zur Aufreinigung entsprechender Farbstoff- und Aufhellersuspension beschrieben. Nachteil: Man arbeitet mit einem zweistufigen Membranverfahren mit unterschiedlichen MWCO's. Die hohen Restlöslichkeiten der eingesetzten Alkalisalze (anionische Farbstoffe/Aufheller) zwingen zum Einsatz von UF + NF Membranen mit den oben beschriebenen Nachteilen.

Die Erfindung betrifft weiterhin den Aufheller der Formel Ia als Bis-^{⊕}N(CH₃)₄-Salz (Ib) sowie als Bis-^{⊕}H₂N(CH₂CH₂OH)₂-Salz (Ic).

Die Erfindung betrifft weiterhin die Verwendung des Aufhellers der Formel Ia als Bis-^{⊕}H₃NCH₂CH₂OH-Salz (Id) sowie als Bis-H₃^{⊕}NCH₂CH₂NHCH₂CH₂OH-Salz (Ie) zum Aufhellen von cellulosehaltigen Materialien, insbesondere von Papier.

Die erfindungsgemäßen Aufheller-Salze Ib und Ic sowie die erfindungsgemäß verwendeten Aufhellersalze Id und Ie eignen sich zum Aufhellen von Papiermassen bei der Papierherstellung, z.B. Zellstoff, Holzstoff (chemical and mechanical pulp) und zum Aufhellen der in der Papierindustrie üblicherweise verwendeten Streichmassen und zwar zum Aufhellen von unpigmentierten, insbesondere aber von pigmentierten Papiermassen und Streichmassen.

Die bekannten Streichmassen enthalten als Bindemittel u.a. Kunststoffdispersionen auf Basis von Copolymerisaten aus Butadien-Styrol, Acrylnitril-Butadien-Styrol, Acrylsäureestern, Ethylen-Vinylchlorid oder Ethylen-Vinylacetat oder auf Basis von Homopolymerisaten, wie Polyvinylchlorid, Polyvinylidenchlorid, Polyethylen, Polyvinylacetat oder Polyurethanen. Ein bevorzugtes Bindemittel besteht aus Styrol-Butylacrylat- oder Styrol-Butadien-Acrylsäure-Mischpolymerisaten. Weitere Polymerlatices sind beispielsweise in der US 3 265 654 beschrieben.

Zum Pigmentieren der Streichmassen dienen üblicherweise Aluminiumsilikate, wie China-Clay und Kaolin, ferner Bariumsulfat, Satinweiss, Titandioxid oder Calciumcarbonat (Kreide).

Die erfindungsgemäßen Streichmassen enthalten vorzugsweise 5 bis 70 Gew.-% eines Weißpigmentes. Das Bindemittel wird vorzugsweise in einer Menge verwendet, die ausreicht, daß der Trockengehalt an polymerer Verbindung 1 bis 30 Gew.-%, vorzugsweise 5 bis 25 Gew.-% des Weißpigmentes ausmacht. Die Menge der erfindungsgemäßen Aufhellerdispersion berechnet sich derart, daß der Aufheller in Mengen von 0,005 bis 1 Gew.-%, insbesondere 0,01 bis 0,55 Gew.-%, bezogen auf Weißpigment, vorliegt.

Die erfindungsgemäße Streichmasse kann dadurch hergestellt werden, daß man die Komponenten in beliebiger Reihenfolge bei Temperaturen von 10 bis 100°C, vorzugsweise 20 bis 80°C, mischt. Zu den Komponenten zählen hier auch die üblichen Hilfsmittel, die zur Regulierung der rheologischen Eigenschaften, wie Viskosität oder Wasserrückhaltevermögen, der Streichmassen eingesetzt werden können. Solche Hilfsmittel sind z.B. natürliche Bindemittel, wie Stärke, Casein, Protein oder Gelatine, Celluloseether, wie Carboxyalkylcellulose oder Hydroxyalkylcellulose, Alginsäure, Alginate, Polyethylenoxid oder Polyethylenoxidalkylether, Mischpolymerisate von Ethylenoxid und Propylenoxid, Polyvinylalkohol, Polyvinylpyrrolidon, wasserlösliche Kondensationsprodukte vom Formaldehyd mit Harnstoff oder Melamin, Polyphosphate oder polyacrylsaure Salze.

Die erfindungsgemäß zu verwendenden Aufheller der Formel Ib, Ic, Id und Ie werden entweder in die fertige Streichmasse oder in eine der Komponenten der Streichmasse eingearbeitet.

Die erfindungsgemäße Streichmasse kann zum Beschichten von Papier, Holz, Folien, wie z.B. Cellulose, Cellulosetriacetat, Textilstoffen etc. verwendet werden. Besonders bevorzugt ist die Anwendung auf Papier und Karton sowie Photopapieren.

Die Streichmasse kann auf das Substrat durch jedes herkömmliche Verfahren aufgebracht werden, beispielsweise mit einem Luftmesser, einem Streichmesser, einer Bürste, einer Rolle, einer Rakel oder einem Stab, worauf dann die Beschichtung z.B. mit einem Infrarottrockner und/oder Heißlufttrockner bei Temperaturen der Substratoberfläche im Bereich von 70 bis 200°C, vorzugsweise von 90 bis 130°C, bis auf eine Restfeuchte von 3 bis 6 Gew.-% getrocknet wird.

Durch die Verwendung der erfindungsgemäßen Streichmassen zeichnen sich die erhaltenen Beschichtungen durch eine optimale Verteilung der optischen Aufheller über die gesamte Oberfläche und eine dadurch bedingte Steigerung des Weißgrades sowie eine hohe Lichtechtheit aus.

### Beispiele

### Beispiel 1

Je 30 kg einer Synthesesuspension eines disulfosauren optischen Aufhellers der Formel (Ia) mit einem Trockengehalt von 13 % und einem Natriumchloridgehalt von 5,5 % werden bei pH 3 bis 4,5 auf einer Mikrofiltrationsanlage aufkonzentriert und entsalzt. Verwendet werden Polymermembranen aus Polyvinylidenfluorid (PVDF) als Tubularmodule mit einem Durchmesser von 1/2". Die Membran hat eine Porenweite von 0,1 µm, das Modul eine Fläche von 0,3 m².

### Entsalzung/Aufkonzentrierung

Beginnend bei 20°C und einem Moduleingangsdruck von 5 bar werden zunächst 15 kg Permeat abgezogen, bevor durch Abzug von 60 kg Permeat und kontinuierliche Zugabe von 60 kg vollentsalztem Wasser diafiltriert wird. Dabei hebt man die Bearbeitungstemperatur auf 40°C an.
Durch Entfernung von 8 kg Permeat wird endaufkonzentriert. Das Retentat hat einen Trockengehalt von 33 %. Der Rest-NaCl-Gehalt beträgt etwa 0,1 %.

### Klarfiltration

Nach Beendigung von Entsalzung und Aufkonzentrierung wird der Druck auf 0 bar gesenkt. Anschl. werden 10 Gew.-% Diethylenglykol und 3 % Diethanolamin zugegeben. Man erwärmt auf 55°C und löst durch Zugabe
a) von Kalilauge bei pH 9,5. Dann erhöht man den Transmembrandruck auf 10 bar und erhält als Permeat die klare Aufhellerlösung. Nach Standardisierung (Versetzen mit vollentsalztem Wasser bis 1 % Lösung in Wasser Extinktion von 135 besitzt; Schichtdicke 1 cm, Wellenlänge 348 nm) resultiert eine hochkonzentrierte Flüssigformulierung, die auch nach 5monatiger Lagerung bei RT und 0°C keine Ausfällungen etc. zeigt.
b) von Natronlauge bei pH 9,5. Dann erhöht man den Transmembrandruck auf 10 bar und erhält als Permeat die klare Aufhellerlösung. Nach Standardisierung resultiert eine Flüssigformulierung, aus der sich nach 3monatiger Lagerung bei 0°C erste Produktkristalle abscheiden.
c) von Lithiumhydroxid bei pH 9,5. Dann erhöht man den Transmembrandruck auf 10 bar und erhält als Permeat die klare Aufhellerlösung. Nach Standardisierung resultiert eine Flüssigformulierung, aus der sich bereits nach einer Woche bei Raumtemperatur erste Produktkristalle abscheiden.

### Beispiel 2

30 kg einer Synthesesuspension des disulfosauren optischen Aufhellers der Formel Ia mit einem Trockengehalt von 14 % und einem Natriumchloridgehalt von 4,5 % werden bei pH 3 bis 4,5 auf einer Mikrofiltrationsanlage aufkonzentriert und entsalzt. Verwendet wird ein keramisches Kapillarmodul mit einer Kanalhöhe von 4 mm, einer Membranfläche von 0,059 m² und einer Porenweite von 0,5 µm.

### Entsalzung/Aufkonzentrierung

Bei 25-30°C und einem Moduleingangsdruck von 2,0 bar werden zunächst 18 kg Permeat abgezogen, bevor durch Abzug von 30 kg Permeat und kontinuierliche Zugabe von 30 kg vollentsalztem Wasser diafiltriert wird. Durch Entfernung von 3 kg Permeat wird endaufkonzentriert. Das Retentat hat einen Trockengehalt von 29 %. Der Rest-NaCl-Gehalt beträgt etwa 0,2 %.

### Klarfiltration

Nach Beendigung von Entsalzung und Aufkonzentrierung wird der Druck auf 0 bar gesenkt. Anschl. werden 10 Gew.-% Triethylenglykol und 3 % Triethanolamin zugegeben. Man erwärmt auf 60°C und löst durch Zugabe von Kalilauge bei pH 9. Jetzt erhöht man den Transmembrandruck auf 3 bar und erhält als Permeat die klare Aufhellerlösung. Nach Standardisierung resultiert eine lagerstabile hochkonzentrierte Flüssigformulierung.

### Beispiel 3

12 kg der gleichen Aufhellersuspension wie in Beispiel 2 werden unter Verwendung eines Rohrmoduls aus Polypropylen mit einer Membranfläche von 0,036 m² und einer Porenweite von 0,2 µm bearbeitet. Im Unterschied zu Beispiel 2 wird das Modul periodisch mit Permeat rückgespült.

### Entsalzung/Aufkonzentrierung

Bei 30°C und einem Moduleingangsdruck von 2,0 bar werden zunächst 5 kg Permeat abgezogen, bevor durch Abzug von 21 kg Permeat und kontinuierliche Zugabe von 21 kg vollentsalztem Wasser diafiltriert wird. Durch Entfernung von 2 kg Permeat wird endaufkonzentriert. Das Retentat hat einen Trockengehalt von 27 %. Der Rest-NaCl-Gehalt beträgt etwa 0,1 %. Der spezifische Permeatfluß liegt hier mit ca. 400 kg/(m²h) etwa doppelt so hoch wie im ersten Beispiel.

### Klärfiltration

Nach Beendigung von Entsalzung und Aufkonzentrierung wird der Transmembrandruck auf 0 bar gesenkt. Anschl. werden 10 Gew.-% Triethylenglykol zugegeben und auf 50°C erwärmt. Bei dieser Temperatur wird durch Zugabe von Kalilauge bei pH 9 weitgehend gelöst. Jetzt erhöht man den Transmembrandruck auf 3 bar und erhält als Permeat die klare Aufhellerlösung, die nach Standardisierung eine lagerstabile hochkonzentrierte Flüssigformulierung ergibt.

### Beispiel 4

Das Retentat aus Beispiel 3 wird nach Beendigung von Entsalzung und Aufkonzentrierung auf 55°C erwärmt und durch Zugabe von Tetramethylammoniumhydroxid bei pH 9,4 weitgehend gelöst. Durch eine Klärfiltration über ein 1,2 µm Membranfilter im dead-end-Betrieb wird eine klare Lösung erhalten, die im Vergleich zu den entsprechenden Alkalisalzformulierungen (vergleichbarer Fremdelektrolytgehalt) über eine außerordentlich gute Lagerstabilität verfügt.

### Beispiel 5

Das Retentat aus Beispiel 3 wird nach Beendigung von Entsalzung und Aufkonzentrierung auf 55°C erwärmt und durch Zugabe von Ethanolamin bei pH 8,7 weitgehend gelöst. Durch eine Klärfiltration über ein 1,2 µm Membranfilter im dead-end-Betrieb werden wenig unlösbare Bestandteile abgetrennt. Die klare Lösung hat eine dem Beispiel 4 vergleichbar gute Lagerstabilität.

### Beispiel 6

Das Retentat aus Beispiel 3 wird nach Beendigung von Entsalzung und Aufkonzentrierung mit 20 % Diethylenglykol versetzt und bei Raumtemperatur durch Zugabe von 2-(2-Aminoethylamino)ethanol bei pH 9,5 weitgehend gelöst. Durch eine Klärfiltration über einen 5 µm Membranfilter im dead-end-Betrieb werden unlösliche Bestandteile abgetrennt. Die klare Lösung hat eine exzellente Lagerstabilität.

### Beispiel 7

Eine nahezu Fremdsalz-freie Lösung enthaltend das Lithium/Natriummischsalz (Molverhältnis ca. 1:1) des Phthalocyaninfarbstoffes Direct Blue 199 wird mit Schwefelsäure bis pH 1,0 versetzt. Die Suspension wird dann mittels einer Tubularmembran mit einer Porenweite von ca. 50 nm zweimal im Wege der Diafiltration entsalzt.

Direct Blau 199 besitzt die Formel

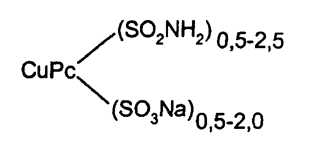

Analog wurden die entsprechenden Ethanolammoniumsalze erhalten, indem man anstelle von LiOH die nachfolgenden Ethanolamine einsetzt.
- 6a:: H₂N CH₂CH₂OH
- 6b:: HN (CH₂CH₂OH)₂
- 6c:: N (CH₂CH₂OH)₃

Die Farbstoffsalze gemäß Beispiel 6 eignen sich hervorragend zum Färben und Bedrucken von Papier, insbesondere zum Bedrucken nach der Ink-Jet-Methode.

## Patentansprüche

1. Verfahren zur Herstellung von Zubereitungen anionischer Farbstoffe und/oder Aufheller, die wenigstens eine SO₃M- und/oder COOM-Gruppe besitzen, worin M = Alkali- oder Ammoniumkation bedeutet, **dadurch gekennzeichnet, daß**
i) man eine wäßrige Suspension enthaltend
a) Farbstoffe und/oder Aufheller, die wenigstens eine freie SO₃H-und/oder COOH-Gruppe besitzen und
b) anorganische Synthesesalze
mit einer Mikrofiltrationsmembran mit Porendurchmessern von 0,05 bis 40 µm entsalzt und
ii) nach der Entsalzung den suspendierten Farbstoff und/oder Aufheller durch Zugabe von Alkali- oder Ammonium-Hydroxid, -Carbonat und/oder -Hydrogencarbonat und/oder Aminen löst und
iii) die nach ii) erhaltene Farbstoff- und/oder Aufhellerlösung gegebenenfalls nach Zugabe weiterer Zusätze mit einer Mikrofiltrationsmembran mit Porendurchmessern von 0,05 bis 40 µm von kolloidalen und/oder unlöslichen Bestandteilen befreit.

2. Verfahren gemäß Anspruch 1, **dadurch gekennzeichnet, daß** in Teilschritt i) die Mikrofiltrationsmembran in Querstrom (cross flow)-Fahrweise betrieben wird.

3. Verfahren gemäß Anspruch 1, **dadurch gekennzeichnet, daß** die zu entsalzende Suspension einen pH-Wert von 1-6, insbesondere von 2 bis 5 besitzt.

4. Verfahren gemäß Anspruch 1, **dadurch gekennzeichnet, daß** die Löslichkeit des die freie SO₃H- und/oder COOH-Gruppe enthaltenden Farbstoffes und/oder Aufhellers in Wasser unter den Verfahrensbedingungen weniger als 5 g/l, vorzugsweise weniger als 1 g/l beträgt.

5. Verfahren gemäß Anspruch 1, **dadurch gekennzeichnet, daß** in Teilschritt i) das Verfahren bei einer Temperatur von 25 bis 70°C durchgeführt wird, vorzugsweise bei 30-50°C.

6. Verfahren gemäß Anspruch 1, **dadurch gekennzeichnet, daß** in Teilschritt i) der anorganische Salzgehalt auf < 1, vorzugsweise <0,5 Gew.-%, bezogen auf die entsalzte Suspension, reduziert wird.

7. Verfahren gemäß Anspruch 1, **dadurch gekennzeichnet, daß** die zu entsalzende Suspension wenigstens einen Aufheller der Formeln (I), (II) und/oder (III) enthält 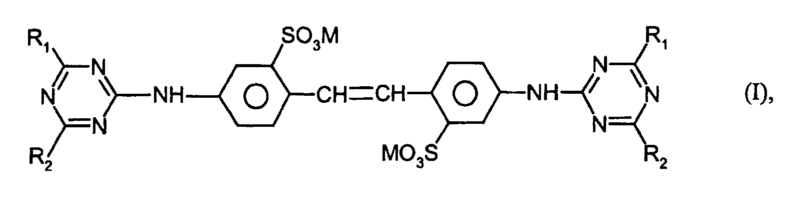 worin
M für H steht,
R₁ und R₂ unabhängig voneinander -NH₂, -NHCH₃, -NHC₂H₅, -N(CH₃)₂, -N(C₂H₅)₂, -NHCH₂CH₂OH, -NHCH₂CH₂CH₂OH, -N(CH₂CH₂OH)₂, -N(CH₂CH₂CH₂OH)₂, -N(CH₃)(CH₂CH₂OH), -NHCH₂CH₂OCH₂CH₂OH, -NHCH₂CH₂CH₂SO₃M, -OH, -OCH₃, -OCH(CH₃)₂, -OCH₂CH₂OCH₃, 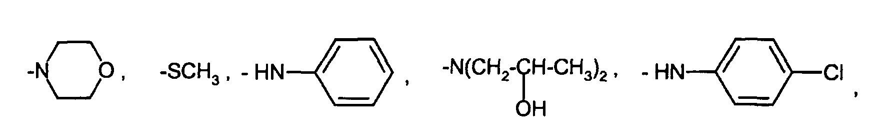 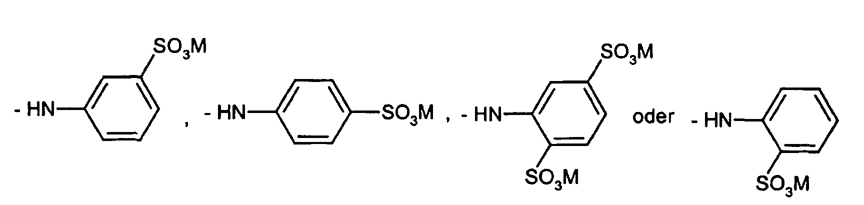
bedeuten, worin
M die angegebene Bedeutung hat;
oder der Formel 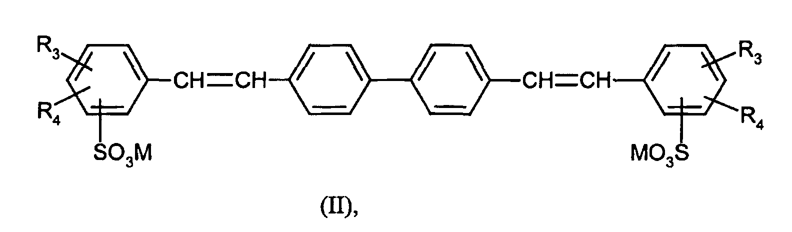 worin
R₃ Wasserstoff, Alkyl mit 1 bis 4 Kohlenstoffatomen, Alkoxy mit 1 bis 4 Kohlenstoffatomen, Halogen oder SO₃M, und
R₄ Wasserstoff oder Alkyl mit 1 bis 4 Kohlenstoffatomen ist und
M die angegebene Bedeutung hat;
ferner die Formel 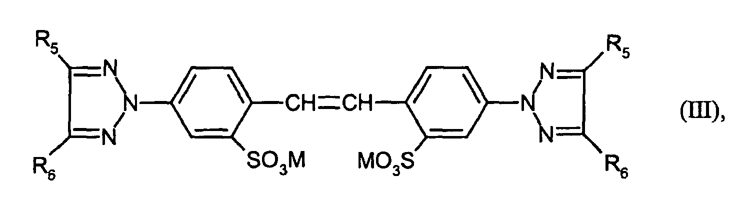 worin
M die angegebene Bedeutung hat und
R₅ und R₆ unabhängig voneinander Wasserstoff, CH₃, 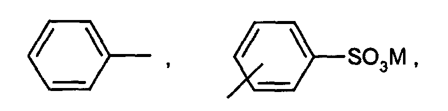
oder
R₅ und R₆ zusammen die Ergänzung zu einem Benzolring bedeuten.

8. Verbindungen der Formel 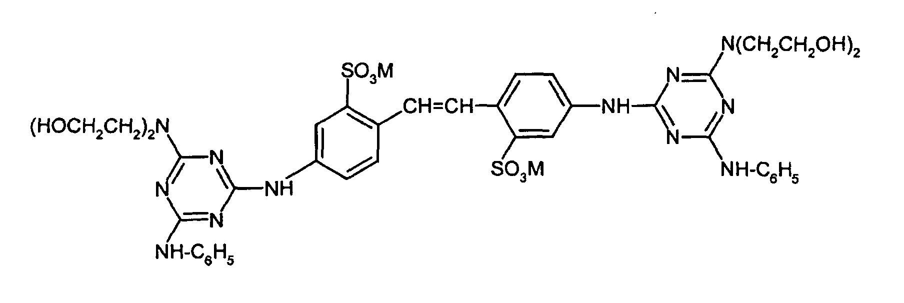 worin
M für ^{⊕}N(CH₃)₄ oder H₂^{⊕}N(CH₂CH₂OH)₂ steht.

9. Verwendung der Verbindungen gemäß Anspruch 9 sowie der Verbindung folgender Formel 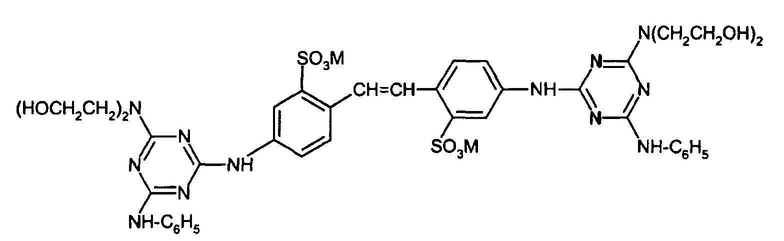 worin
M für H₃^{⊕}NCH₂CH₂OH oder H₃^{⊕}NCH₂CH₂NHCH₂CH₂OH steht zum Aufhellen von cellulosehaltigen Materialien, insbesondere von Papier.

10. Streichmasse enthaltend
5 bis 70 Gew.-% eines Weißpigments und 0,005 bis 1 Gew.-% eines Aufhellers, bezogen auf Weißpigment, der Formel 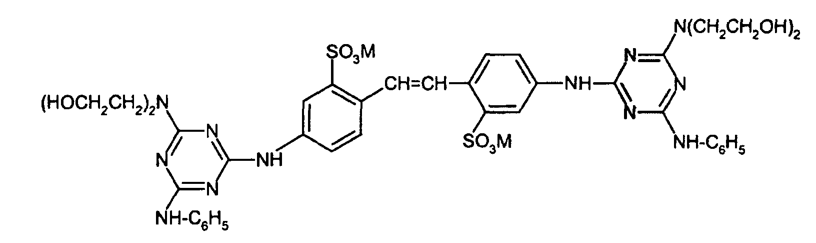 worin
M für ^{⊕}N(CH₃)₄, H2^{⊕}N(CH₂CH₂OH)₂, H3^{⊕}NCH₂CH₂OH oder H₃^{⊕}NCH₂CH₂NHCH₂CH₂OH steht.

## Claims

1. Process for preparing formulations of anionic dyes and/or brighteners which possess at least one group SO₃M and/or COOM in which M denotes alkali metal or ammonium cation, **characterized in that**
i) an aqueous suspension comprising
a) dyes and/or brighteners which possess at least one free SO₃H and/or COOH group and
b) inorganic synthesis salts
is desalinated using a microfiltration membrane having pore diameters of from 0.05 to 40 µm and
ii) following the desalination, the suspended dye and/or brightener is dissolved by adding alkali metal or ammonium hydroxide, carbonate and/or hydrogen carbonate, and/or amines, and
iii) the dye solution and/or brightener solution obtained in accordance with ii), directly or following the addition of further additives is freed from colloidal and/or insoluble constituents using a microfiltration membrane having pore diameters of from 0.05 to 40 µm.

2. Process according to Claim 1, **characterized in that** in substep i, the microfiltration membrane is operated in cross-flow mode.

3. Process according to Claim 1, **characterized in that** the suspension to be desalinated has a pH of 1-6, in particular from 2 to 5.

4. Process according to Claim 1, **characterized in that** the solubility of the dye and/or brightener containing the free SO₃H and/or COOH group in water under the process conditions is less than 5 g/l, preferably less than 1 g/l.

5. Process according to Claim 1, **characterized in that** in substep i, the process is carried out at a temperature of from 25 to 70°C, preferably at 30-50°C.

6. Process according to Claim 1, **characterized in that** in substep i, the inorganic salt content is reduced to < 1, preferably < 0.5% by weight, based on the desalinated suspension.

7. Process according to Claim 1 **characterized in that** the suspension to be desalinated comprises at least one brightener of the formulae (I), (II) and/or (III): 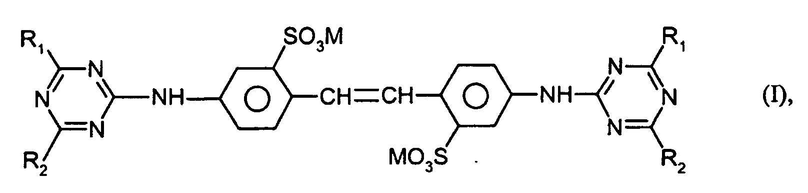 in which
M represents H,
R₁ and R₂ independently of one another denote -NH₂, -NHCH₃, -NHC₂H₅, -N(CH₃)₂, -N(C₂H₅)₂, -NHCH₂CH₂OH, -NHCH₂CH₂CH₂OH, -N(CH₂CH₂OH)₂, -N(CH₂CH₂CH₂OH)₂, -N(CH₃)(CH₂CH₂OH), -NHCH₂CH₂OCH₂CH₂OH, -NHCH₂CH₂CH₂SO₃M, -OH, -OCH₃, -OCH(CH₃)₂, -OCH₂CH₂OCH₃, 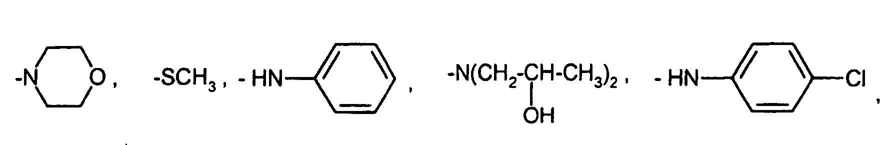 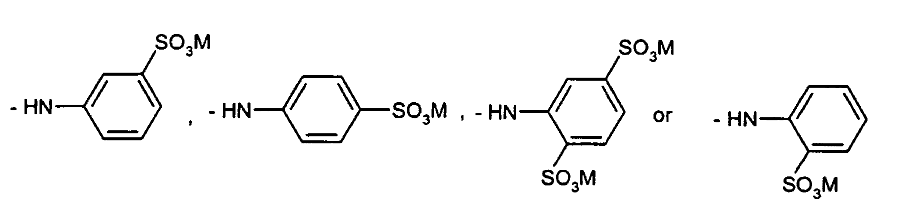
in which
M is as defined;
or of the formula 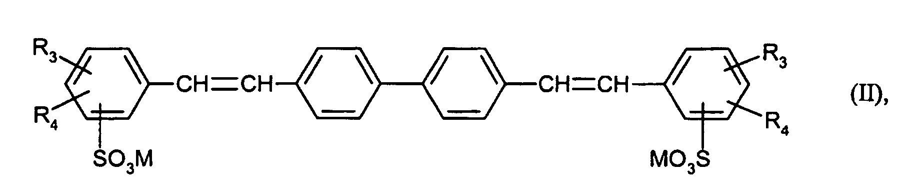 in which
R₃ is hydrogen, alkyl of 1 to 4 carbon atoms, alkoxy of 1 to 4 carbon atoms, halogen or SO₃M, and
R₄ is hydrogen or alkyl having 1 to 4 carbon atoms and
M is as defined;
and also the formula 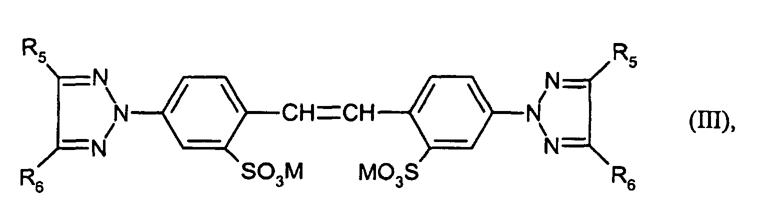 in which
M is as defined and
R₅ and R₆ independently of one another denote hydrogen, CH₃, 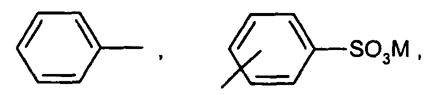
or
R₅ and R₆ together complete a benzene ring.

8. Compounds of the formula 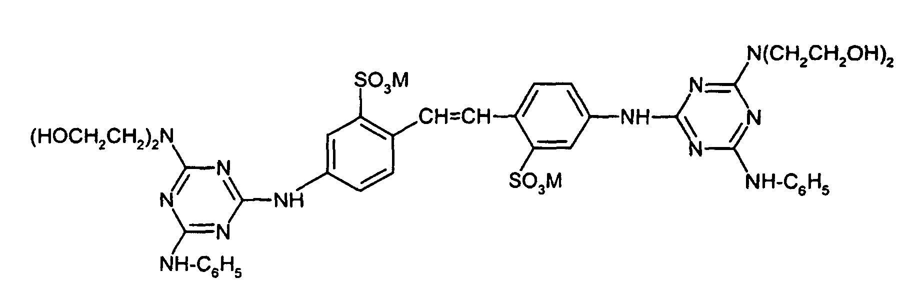 in which
M represents ^{⊕}N(CH₃)₄ or H₂^{⊕}N(CH₂CH₂OH)₂.

9. Use of the compounds according to Claim 8 and of the compound of the following formula 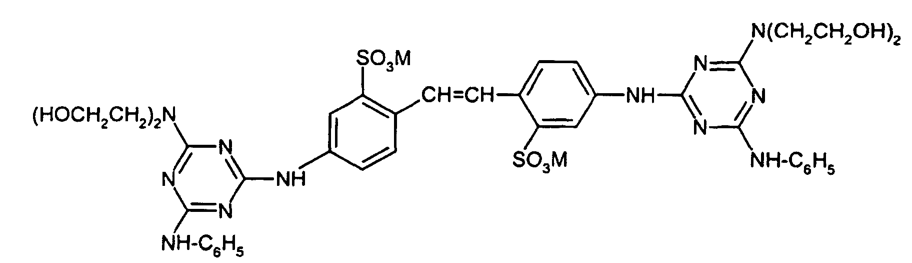 in which
M represents H₃^{⊕}NCH₂CH₂OH or H₃^{⊕}NCH₂CH₂NHCH₂CH₂OH for whitening materials containing cellulose, especially paper.

10. Coating slip comprising
from 5 to 70% by weight of a white pigment and from 0.005 to 1% by weight of a brightener, based on white pigment, of the formula 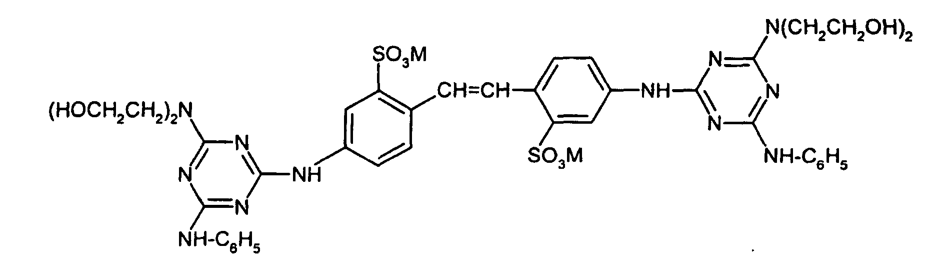 in which
M represents ^{⊕}N(CH₃)₄, H₂^{⊕}N(CH₂CH₂OH)₂, H₃^{⊕}NCH₂CH₂OH or H₃⊕NCH₂CH₂NHCH₂CH₂OH.

## Revendications

1. Procédé de fabrication pour la préparation de colorants et/ou d'azurants optiques anioniques qui possèdent au moins un groupe SO₃M et/ou COOM, dans lequel M signifie un cation alcalin ou ammonium, **caractérisé en ce que**
i) on déminéralise une suspension aqueuse contenant
a) des colorants et/ou des azurants optiques qui possèdent au moins un groupe SO₃H et/ou un groupe COOH et
b) des sels inorganiques de synthèse
par une membrane de microfiltration avec des diamètres de pores de 0,05 à 40 µm et **en ce que**
ii) après la déminéralisation, on dissout le colorant et/ou l'azurant optique en suspension par addition d'hydroxyde, de carbonate ou d'hydrogénocarbonate alcalin ou d'ammonium, ou d'amines et
iii) **en ce qu'**on débarrasse la solution de colorant et/ou d'azurant optique obtenue après ii) des composants colloidaux et/ou insolubles par une membrane de microfiltration avec des diamètres de pores de 0,05 à 40 µm, le cas échéant après l'addition d'autres additifs.

2. Procédé selon la revendication 1, **caractérisé en ce que**, dans l'étape partielle i), la membrane de microfiltration est exploitée selon le mode de fonctionnement à courant croisé (cross flow).

3. Procédé selon la revendication 1, **caractérisé en ce que** la suspension à déminéraliser possède un pH de 1 à 6, en particulier de 2 à 5.

4. Procédé selon la revendication 1, **caractérisé en ce que** la solubilité dans l'eau du colorant et/ou de l'azurant optique contenant les groupes SO₃H ou COOH libres est de moins de 5 g/l sous les conditions du procédé, de préférence de moins de 1 g/l.

5. Procédé selon la revendication 1, **caractérisé en ce que**, dans l'étape partielle i), le procédé est effectué à une température de 25 à 70 °C, de préférence de 30 à 50 °C.

6. Procédé selon la revendication 1, **caractérisé en ce que** dans l'étape partielle i), la teneur en sel inorganique est réduite à <1, de préférence à <0,5 % en poids, rapporté à la suspension déminéralisée.

7. Procédé selon la revendication 1, **caractérisé en ce que** la suspension à déminéraliser contient au moins un azurant optique des formules (I), (II) et/ou (III) 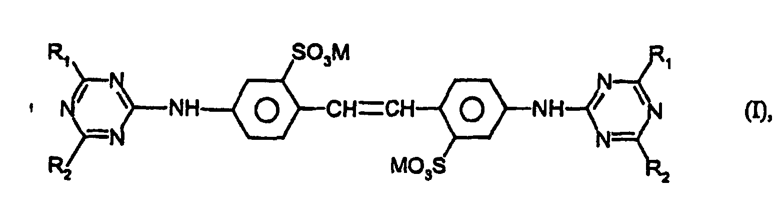 dans laquelle
M représente H,
R₁ et R₂ signifient, indépendamment l'un de l'autre NH₂, NHCH₃, -NHC₂H₅, -N(CH₂CH₂OH)₂. -N(CH₂CH₂CH₂OH)₂, -N(CH₃)(CH₂CH₂OH), -NHCH₂CH₂OCH₂CH₂OH, -NHCH₂CH₂CH₂SO₃M, -OH, -OCH₃, -OCH(CH₃)₂, -OCH₂CH₂OCH₃, 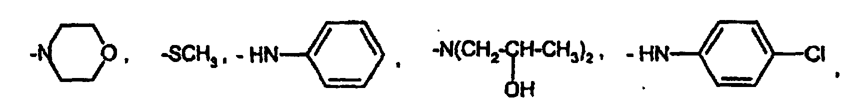 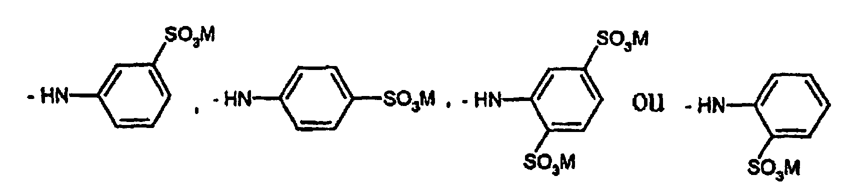 -N(CH₃)₂, -N(C₂H₅)₂, -NHCH₂CH₂OH, -NHCH₂CH₂CH₂OH,
dans lesquels
M a la signification susmentionnée ;
ou la formule 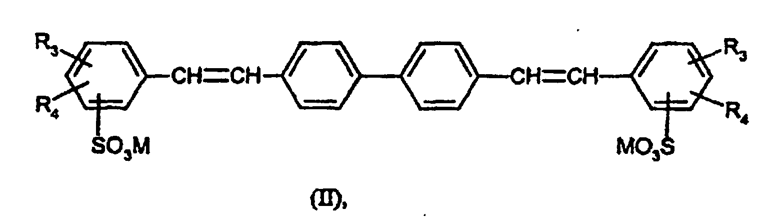
dans laquelle
R₃ est un hydrogène, un alkyle à 1 à 4 atomes de carbone, un alcoxyle à 1 à 4 atomes de carbone, un halogène ou SO₃M et
R₄ est un hydrogène ou un alkyle à 1 à 4 atomes de carbone et
M a la signification susmentionnée ;
en outre la formule 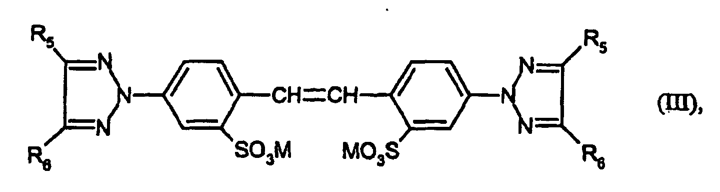
dans laquelle
M a la signification susmentionnée et
R₅ et R₆ sont, indépendamment l'un de l'autre, un hydrogène, un CH₃, 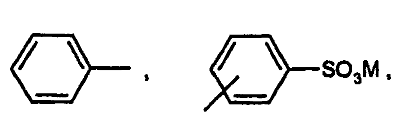
ou
R₅ et R₆ ensemble ont la signification du complément à un noyau benzénique.

8. Composés de la formule 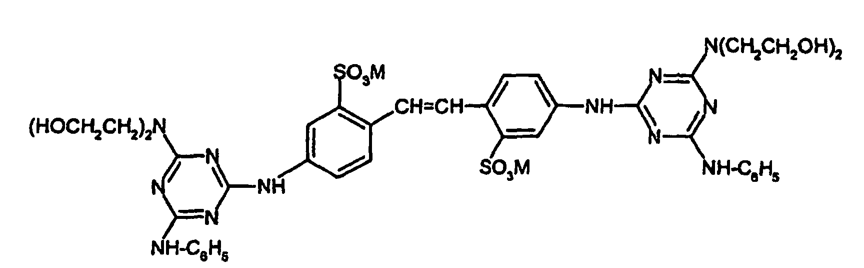 dans laquelle
M représente ⁺N(CH₃)₄ ou H₂⁺N(CH₂CH₂OH)₂.

9. Utilisation des composés d'après la revendication 9, ainsi que des composés de la formule suivante 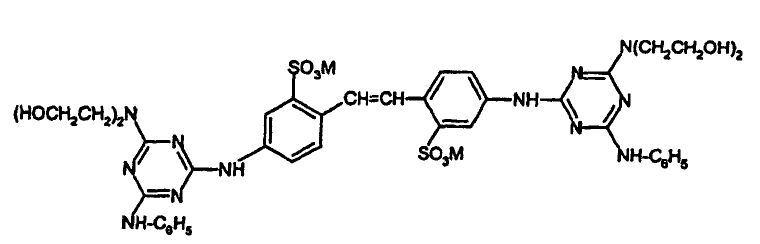 dans laquelle
M représente H₃⁺NCH₂CH₂OH ou H₃⁺NCH₂CH₂NHCH₂CH₂OH pour éclaircir des matériaux contenant de la cellulose, en particulier du papier.

10. Matière à appliquer au pinceau, contenant
5 à 70 % en poids d'un pigment blanc et 0,005 à 1 % en poids, rapporté au pigment blanc, d'un azurant optique de la formule 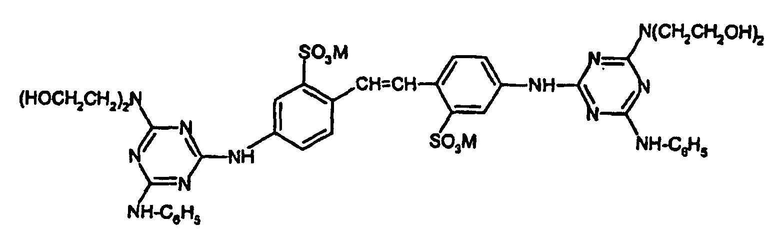 dans laquelle
M représente ⁺N(CH₃)₄, H₂⁺N(CH₂CH₂OH)₂, H₃⁺NCH₂CH₂OH ou H₃⁺NCH₂CH₂NHCH₂CH₂OH
